# EUROPÄISCHE PATENTSCHRIFT

(11) **EP 1 652 742 B1**
(45) Veröffentlichungstag und Bekanntmachung des Hinweises auf die Patenterteilung: **19.12.2012**
(21) Anmeldenummer: 05023644.7
(22) Anmeldetag: 28.10.2005
(51) Int. Cl.: B60S 1/50

(54) **Anordnung mit einem Vorratsbehälter zur Versorgung eines kraftfahrzeuginternen Systems**
Assembly with a reservoir for supplying an internal vehicle system
Dispositif comportant un réservoir pour alimenter un système interne au véhicule

(30) Priorität: 28.10.2004 DE 202004016718 U
(43) Veröffentlichungstag der Anmeldung: 03.05.2006
(73) Patentinhaber: Fränkische Rohrwerke Gebr. Kirchner GmbH + Co KG, 97486 Königsberg/Bayern (DE)
(72) Erfinder: Margot, Christian, 83400 Hyeres (FR); Schröter, Sören, 96049 Bamberg (DE)
(74) Vertreter: Schwabe - Sandmair - Marx

(56) Entgegenhaltungen:
- WO-A-2005/085026
- FR-A- 1 133 169
- PATENT ABSTRACTS OF JAPAN Bd. 2003, Nr. 12, 5. Dezember 2003 (2003-12-05) -& JP 2004 291838 A (TOYOTA MOTOR CORP), 21. Oktober 2004 (2004-10-21)
- PATENT ABSTRACTS OF JAPAN Bd. 1995, Nr. 09, 31. Oktober 1995 (1995-10-31) & JP 07 145760 A (TOYOTA MOTOR CORP), 6. Juni 1995 (1995-06-06)

## Beschreibung

Die Erfindung betrifft eine Anordnung mit einem Vorratsbehälter zur Versorgung eines kraftfahrzeuginternen Systems, etwa einen Behälter zur Versorgung eines Spritzwassersystems zur Reinigung von Kraftfahrzeugscheiben, Scheinwerfern oder dgl., gemäß dem Anspruch 1.

Auf dem Fachgebiet des Automobilbaus werden diverse verschiedene Vorratsbehälter benötigt, um Flüssigkeiten zu speichern, die während oder zum Betrieb des Kraftfahrzeuges benötigt werden. So ist es beispielsweise zur Reinhaltung der Kraftfahrzeugscheiben sowie der Kraftfahrzeugscheinwerfer erforderlich, einen Vorrat an Reinigungsflüssigkeiten, in der Regel Wasser vermischt mit einer Reinigüngsmischung, zu speichern, um diese im Bedarfsfalle einem Wischwaschsystem zuleiten zu können, das dann die Fahrzeugscheiben bzw. Fahrzeugscheinwerfer mit der Flüssigkeit bespritzt und reinigt. Gleichermaßen gibt es Dehrigefäße, beispielsweise für Kühlflüssigkeit und andere Fluide, für die die vorliegende Erfindung auch zum Einsatz gelangen könnte.

Insbesondere bei Scheibenwaschsystemen in Kraftfahrzeugen werden Rohre zum Zwecke des Transportes von Waschflüssigkeit vom Vorratsbehälter zu den Auslassöffnungen bzw. Auslassdüsen verwendet. Die Reinigungsflüssigkeit wird in ca. 3 bis 6 Liter großen Vorratsbehältern gespeichert. Diese Vorratsbehälter sind jeweils individuell an ein bestimmtes Fahrzeug angepasst, um in Hohlräume passen zu können, wobei gleichzeitig der zur Verfügung stehende Motorraum optimal ausgenutzt werden soll, d.h., in der Regel werden die Kraftfahrzeuge immer kompakter gebaut und somit wird es auch immer schwieriger, Vorratsbehälter an Hohlräume anzupassen, zumal die Hohlräume schwerer zugänglich werden und somit auch die Vorratsbehälter in ihrem Volumen kleiner gebaut werden müssen, um überhaupt an den noch freien Stellen montiert werden zu können. Dabei lässt es sich nicht vermeiden, dass solche Vorratsbehälter aufgrund der immer geringeren Platzverhältnisse zunehmend länger und schmäler gebaut werden müssen. Nahezu jeder Fahrzeugtyp benötigt seinen eigenen Vorratsbehälter und so ist es unvermeidlich, dass zu jedem Fahrzeugtyp eine spezielle Blasform oder Spritzgussform zur Verfügung gestellt werden muss, um mit diesen Methoden entsprechende Vorratsbehälter fertigen zu können, die dann fahrzeugspezifisch nur in einen Typ von Fahrzeug eingebaut werden können. Es ist klar, dass durch eine solche Vorgehensweise einerseits die Herstellungskosten für einen Vorratsbehälter immens ansteigen und andererseits auch die Kosten für die Montage überproportional steigen.

Die JP 2004-291838 A bezieht sich auf einen Waschanlagentank, welcher so aufgebaut ist, dass ein rohrförmiger Faltenbalgabschnitt durch einen vorderen Wandabschnitt und einen hinteren Wandabschnitt blockiert werden kann, und so, um in der vorderen/hinteren Richtung anzuliegen, wenn er aufgenommen bzw. in Empfang genommen wird. Folglich kann dieser Waschanlagentank, der einen Widerstand gegenüber einem durch Einwirkung verursachten Bruch hat, an einem Abschnitt positioniert werden, der eine Einwirkung bzw. einen Stoß in einem Fahrzeug aufnimmt, was Einschränkungen bei der Gestaltung bzw. Auslegung verringert.

Es ist demzufolge eine Aufgabe gemäß der vorliegenden Erfindung, den oben erörterten Stand der Technik im Hinblick auf die vorgenannten Nachteile Erleichterung zu verschaffen. Insbesondere soll ein Vorratsbehälter bevorzugt für Spritzwasser vorgeschlagen werden, der zu beliebigen Kraftfahrzeugtypen passt und eine Vielzahl von Volumina für die zu bevorratende Flüssigkeit bereitstellen kann.

Die vorstehende Aufgabe wird durch den Gegenstand des unabhängigen Anspruchs 1 gelöst, vorteilhafte Weiterbildungen gehen aus den abhängigen Ansprüchen hervor.

Vorteilhaft lässt sich der Vorratsbehälter an unterschiedlichste räumlich Umgebungen anpassen, indem der Volumenexpansionsabschnitt beispielsweise in einem kollabierten Zustand in einen Hohlraum eines Fahrzeuges eingeführt wird, um dort expandiert zu werden um auf ein bestimmtes Volumen zuzunehmen. Soll der Behälter wieder entfernt werden, kann er beispielsweise mittels eines Unterdrucks wieder in seinem Volumen und damit in seinen Abmessungen reduziert werden, um wieder entfernt zu werden.

Der erfindungsgemäße Vorratsbehälter kann etwa auch im Stoßfänger eines Kraftfahrzeuges untergebracht werden.

Wesentlich ist jedoch, dass ein und derselbe Behälter für verschiedene Kraftfahrzeuge an deren Platzverhältnisse angepasst werden kann und in dem einen Kraftfahrzeug beispielsweise als Vorratsbehälter für 6 Liter Waschflüssigkeit dienen kann, während er in einem anderen Kraftfahrzeug lediglich als Vorratsbehälter für beispielsweise 2,5 oder 3 Liter dient.

Besonders vorteilhaft ist es, wenn der Volumenexpansions- bzw. Volumenreduktionsabschnitt einen Wellungs- oder Faltenbalgbereich umfasst. Die Wellungen oder Falten können ziehharmonikaartig zusammengefaltet bzw. auseinandergefaltet werden. Auf diese Art und Weise kann das Volumen des erfindungsgemäße Vorratsbehälters über einen großen Bereich, etwa zwischen 1,5 und 8 Litern oder mehr im Falle von Lkws variiert werden.

Die Größe des Vorratsbehälters kann durch eine Verlängerung des Formkanals um einen oder mehrere Formbacken in einem Korrugator variiert werden.

Bevorzugt umfasst der erfindungsgemäße Vorratsbehälter auch einen Formanpassungsabschnitt, so dass der Behälter in seiner Form veränderbar ist. D.h., der erfindungsgemäße Vorratsbehälter kann, obwohl seine nach der Produktion vorgesehen Form beispielsweise zylindersymmetrisch ist, gebogen werden, in Schlangenlinien verformt werden oder sonst wie verändert werden. Dabei kann bevorzugt der Volumenabschnitt bzw. der Volumenexpansions- bzw. Volumenreduktionsabschnitt auch als Formanpassungsabschnitt ausgebildet sein, d.h., er ist nicht nur entlang der Zylindersymmetrieachse expandierbar oder kollabierbar, sondern kann darüber hinaus, wie oben angedeutet, etwa in Schlangenlinien, in einer U-Form oder dgl. expandiert werden, um einerseits in seinem Volumen vergrößert zu werden und andererseits der spezifischen Form eines Hohlraumes innerhalb eines Motorraumes eines Kraftfahrzeuges angepasst werden.

Es ist klar, dass ein solcher Behälter mit einer einzigen standardisierten Form in diverser Art hergestellt werden kann, jedoch für eine Vielzahl von Platzverhältnissen in einer Unzahl von verschiedenen Fahrzeugen eingesetzt werden kann. Beispielsweise kann eine Blasform oder eine Spritzform verwendet werden, mit der ein Behälter mit einem Volumen von z.B. 7 Litern hergestellt wird, der einen Faltenbalg oder aber einen wellrohrartigen Abschnitt aufweist. Ein solcher Behälter kann nach seiner Herstellung dann beispielsweise auf ein Volumen von 3 Litern axial kollabiert werden, oder kann beispielsweise so kollabiert/expandiert werden, dass er eine U-Form einnimmt, um bestimmten Platz- und Raumverhältnissen angepasst zu werden. Eine besonders günstige Art der Herstellung des erfindungsgemäßen Vorratsbehälters kann sich dadurch ergeben, dass dieser beispielsweise mittels eine Korrugators hergestellt wird. Dabei wird ein Schlauch aus warmplastisch verformbarem Kunststoff aus einer Extruderdüse herausgepresst und in den Formkanal eines Korrugators eingeführt. In diesem Korrugator können beispielsweise eine Endloskette von Behältern mit wellrohr- oder faltenbalgartigen Abschnitten hergestellt werden, wobei an jeweils vorgesehenen Trennstellen später die Endloskette aus Vorratsbehältern gemäß der Erfindung separiert wird, um einzelne Vorratsbehälter zu ergeben. Dabei kann beispielsweise auf einer Seite des Behälters auch gleich eine Rohrverlängerung vorgesehen sein, wobei über eine solche Rohrverlängerung etwa eine Befüllung vorgenommen werden kann. Damit kann sogleich mit dem erfindungsgemäßen Vorratsbehälter einstückig ein Befüllkanal für den Vorratsbehälter ausgebildet werden. Bevorzugt kann der erfindungsgemäße Vorratsbehälter an einem seiner Anschlussabschnitte mit einem anschließbaren Endabschnitt versehen sein. Dieser anschließbare Endabschnitt kann bevorzugt einen Zu- und/oder Ablaufabschnitt umfassen und kann bevorzugt auf- und/oder einsteckbar sein. Im Falle der Verwendung eines Blasverfahrens oder eines Spritzgussverfahrens kann natürlich ein solcher Endabschnitt auch einstückig zusammen mit den übrigen Bestandteilen des erfindungsgemäßen Vorratsbehälters hergestellt werden. Im Falle der Herstellung des erfindungsgemäßen Vorratsbehälters mittels eines Korrugationsverfahrens ist es bevorzugt, wenigstens einen Endabschnitt auf- oder einzuschieben, wobei dieser Endabschnitt beispielsweise an dem Endabschnitt des erfindungsgemäßen Vorratsbehälters festgeklebt werden kann, mit Rastabschnitten in einen Halteeingriff treten kann oder dgl. mehr. Auch mittels eines Gewindes oder dgl. kann die gewünschte Haltefunktion bewerkstelligt werden.

Bevorzugt sollte zwischen dem Anschlussabschnitt und dem Endabschnitt ein Dichtmittel, beispielsweise in der Form eines O-Ringes etwa aus Gummi oder Kautschuk, angeordnet sein. Ein O-Ring könnte beispielsweise in einer Aufnahmenut bzw. -rille am Anschlussabschnitt des Vorratsbehälters oder aber am Endabschnitt vorgesehen sein.

Bevorzugt umfasst der so ausgebildete Endabschnitt auch eine Pumpeinrichtung, um das bevorratete Medium aus dem Vorratsbehälter herauspumpen zu können, um es zum Einsatzort zu befördern, etwa zu einer Front- oder Heckscheibe, einem Scheinwerfer oder dgl.

Die Pumpeinrichtung kann z.B. an dem Endabschnitt festgeklebt sein, es kann aber auch eine Klammer oder Rasteinrichtung vorgesehen sein, um die Pumpeinrichtung am Endabschnitt des erfindungsgemäßen Vorratsbehälters zu halten.

Gemäß einer vorteilhaften Ausgestaltungsform nach der Erfindung kann die Pumpeinrichtung, die an dem Anschlussabschnitt des Vorratsbehälters und insbesondere an einem speziellen Endabschnitt vorgesehen sein kann, mit einem Restvolumen ausgebildet sein. Versuche haben nämlich gezeigt, dass die Verwendung des Vorratsbehälters gemäß der Erfindung, der in beliebigen Hohlräumen in einem Kraftfahrzeug untergebracht werden kann, durchaus zu dem Problem führen kann, dass auch bereits bei geringen, insbesondere aber bei größeren Neigungswinkeln des Kraftfahrzeugs, die dazu führen, dass sich die Reinigungsflüssigkeit in ihrer Lage verändert, ein Zustand auftritt, bei dem die Pumpeinrichtung keine Spritzflüssigkeit mehr zugeführt bekommt, während jedoch der Vorratsbehälter trotzdem noch hinreichend befüllt ist. In einem derartigen Zustand würde ein Füllstandsfühler am Ende des Vorratsbehälters messen, dass keine Spritzflüssigkeit mehr in dem Vorratsbehälter vorhanden wäre, während tatsächlich in Extremsituationen der Behälter noch nahezu voll ist bzw. in häufigeren Situationen beispielsweise noch zu einem Drittel voll ist, wobei jedoch diese Spritzflüssigkeit von einem Messfühler nicht mehr erfasst werden kann. Aus diesem Grunde ist es von Vorteil, wenn die Pumpeinrichtung ein zusätzliches Volumen aufweist, das hier als Restvolumen bezeichnet wird, um Spritzflüssigkeit auch bei größeren Neigungen des Vorratsbehälters und auch der Pumpeinrichtung selbst bevorraten zu können. Wird der Messfühler für den Füllstand in diesem Restvolumenabschnitt untergebracht, kann selbst bei größeren Neigungen des Vorratsbehälters gemäß der Erfindung noch eine realistische Anzeige angegeben werden. Ansonsten würde in extremen Situationen nicht nur in einer extremen Schräglage des Kraftfahrzeuges beispielsweise an einem Berghang die Füllstandsanzeige eines Kraftfahrzeuges anzeigen, dass der Vorratsbehälter entleert ist, sondern bei Bergfahrten prinzipiell bei jeder Steigung, die zu erklimmen ist.

Deshalb ist gemäß einer besonders vorteilhaften Ausgestaltung gemäß der Erfindung die an den Vorratsbehälter anzuklippsende bzw. anzusetzende Pumpeinrichtung vorteilhafterweise mit einem Restvolumenabschnitt ausgebildet, der ein Restvolumen an Reinigungsflüssigkeit selbst bei starken Hanglagen zurückbehält, um so eine unnötige Anzeige, dass der Vorratsbehälter entleert sei, was tatsächlich nicht zutrifft, zu vermeiden.

Gemäß dieser Ausführungsform nach der Erfindung würde die Anordnung gemäß der Erfindung, die auch als modulares Behältersystem zu bezeichnen sein könnte, aus einem integral angeformten Befüllkanal und einem Behälterabschnitt bestehen, der an einem Ende geöffnet ist. An diesem Ende wäre ein Dicht- und Rastelement auszubilden, wobei an diesem Rastabschnitt ein standardisierter Verschluss mit integrierter Pumpe angebracht wäre. In Bezug auf die Herstellbarkeit der erfindungsgemäßen Anordnung wäre es auch bezüglich dieser Ausführungsform vorteilhaft, dass bei der Herstellung der Anordnung mittels eines Korrugators die Größe des Vorratsbehälters bzw. die Abmessungen des Befüllkanals ganz einfach durch Hinzufügung oder durch Weglassung von Formbackenhälften in den umlaufenden Formbacken eines Korrugators verändert werden könnte, um unterschiedlichen Abmessungen und unterschiedlichen Volumina zu genügen, die für ein spezifisches Kraftfahrzeug benötigt werden würden. Die Pumpeinrichtung könnte für sämtliche Behältervarianten verwendet werden, wobei jedoch die Kosten für die Herstellung der Anordnung für beliebige Fahrzeugtypen erheblich vermindert werden könnten, da keine separaten Werkzeuge für jeden verschiedenen Behälter bzw. jede abweichende Behältergröße erforderlich wäre.

Bevorzugt kann der erfindungsgemäße Vorratsbehälter wenigstens abschnittsweise eine von der Kreisform abweichende Form im Querschnitt aufweisen. Insbesondere ist diese von der Kreisform abweichende Querschnittsform im Bereich des Volumenexpansions- bzw. Volumenreduktionsabschnittes vorgesehen. Zwar kann dieser Bereich auch kreisförmig ausgebildet sein, jedoch hat es sich gezeigt, dass es besonders günstig ist, wenn dieser Bereich etwa oval, elliptisch oder dgl. ausgebildet ist.

Um einen solchen erfindungsgemäßen Vorratsbehälter im Motorraum zu halten, kann beispielsweise eine klammerartige Einrichtung vorgesehen sein, die mit ihren Klammerabschnitten zwischen Wellenberge bzw. Faltenbalgberge eingreift, um den Behälter festzuhalten, so dass dieser auch während der Fahrt trotz seiner Flexibilität nicht in Vibrationen geraten kann, die zu einer unerwünschten Geräuschentwicklung führen.

Eine besonders bevorzugte Ausführungsform ergibt sich, wenn der erfindungsgemäße Vorratsbehälter mit einem Volumenabschnitt, einem Ablaufabschnitt und einem Zulaufabschnitt versehen ist, wobei erfindungsgemäß der Volumenabschnitt einen Volumenexpansions- bzw. einen Volumenreduktionsabschnitt umfasst. Ein solcher Vorratsbehälter ist einstückig an seinem Zulaufabschnitt insbesondere mittels eines Korrugationsherstellungsverfahrens mit einem wellohrartigen Befüllrohr ausgebildet, wobei der Ablaufabschnitt aus einer festklammerbaren oder festklebbaren Endabschnittshülse ausgebildet ist, die über den Volumenabschnitt übergreift, wobei an dem Volumenabschnitt eine Dichtvorrichtung vorgesehen ist. Andererseits ist es auch vorgesehen, dass der Ablaufabschnitt durch eine Quetschvorrichtung im Korrugator in den noch warmplastisch formbaren Kunststoff eingeformt wird.

Gemäß der Erfindung wird folglich ein Vorratsbehälter insbesondere für Scheibenwaschflüssigkeit zur Verfügung gestellt, der für eine Vielzahl von Volumenanforderungen und Platzverhältnissen in unterschiedlichsten Fahrzeugtypen zum Einsatz gelangen kann. Dieser Vorratsbehälter ist nicht nur leicht montierbar, sondern kann beispielsweise auch in dem Innenbereich eines Stoßfängers montiert werden, um somit zusätzlich Platz sparen zu können und um eine optimierte Gewichtsverteilung im Fahrzeug zu erreichen.

Nachfolgend wird die vorliegende Erfindung anhand der beigefügten bzw. nachfolgenden Darstellungen näher erläutert, wobei weitere Merkmale gemäß der Erfindung, Zielsetzungen gemäß der Erfindung und Vorteile gemäß der Erfindung offenbart werden. In den Darstellungen zeigen:
- Fig. 1: eine schematische Seitenansicht eine erfindungsgemäßen Vorratsbehälters in seiner Einbaulage in einem Stoßfänger;
- Fig. 2: den Stoßfänger gemäß Fig. 1 in einer perspektivischen Ansicht;
- Fig. 3: den Stoßfänger gemäß Fig. 1 in der Schnittansicht gemäß der Schnittebene B-B nach Fig. 1;
- Fig. 4: den vergrößerten Ausschnitt des Bereiches A gemäß Fig. 3 in einer teilweisen Schnittansicht;
- Fig. 5: eine perspektivische Ansicht einer weiteren Ausführungsform gemäß der Erfindung, und
- Fig. 6: eine vergrößerte Teilansicht des Ausschnitts A nach Fig. 6

In den Figuren sind gleiche oder wenigstens funktionsgleiche Bestandteile mit gleichen Bezugszeichen benannt.

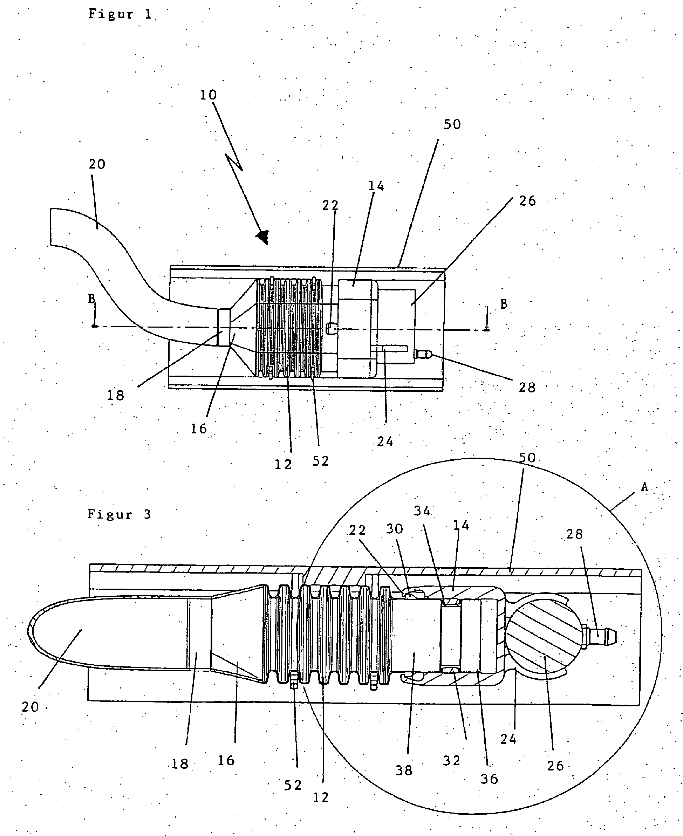

Die Fig. 1 zeigt einen erfindungsgemäßen Vorratsbehälter 10, der in einen Stoßfänger 50 aufgenommen ist. Der Vorratsbehälter 10 weist einen Volumenexpansions- bzw. Volumenreduktionsabschnitt 12 auf, der im dargestellten Fall aus einem wellrohrartigen Abschnitt besteht.

Der Vorratsbehälter 10 wird im Volumenexpansions- bzw. Volumenreduktionsabschnittsbereich 12 über Klammern 52 innerhalb des Stoßfängers 50 gehalten. Es ist klar, dass der erfindungsgemäße Vorratsbehälter natürlich auch in anderen Hohlraumbereichen eines Kraftfahrzeuges gehalten sein kann.

Der Vorratsbehälter 10 weist im Anschluss an den Volumenexpansions- bzw. Volumenreduktionsabschnitt, nachfolgend Volumenabschnitt genannt, zur linken Hand eine Übergangsabschnitt 16 auf, der den Durchmesser des Volumenabschnitts 12 in den Anschlussdurchmesser 18 eines Befüllrohres bzw. Befüllkanals 20 überfuhrt.

Der Befüllkanal 20, der Kanalanschlussabschnitt 18, der Übergangsabschnitt 16 und der Volumenabschnitt 12 können in einem Stück hergestellt sein. Damit zusammen kann auch der Anschlussabschnitt ausgebildet werden, der sich unter einem Endabschnitt 14 verbirgt. Der Endabschnitt 14 ist mit einem Rastabschnitt 22 an einer Rastschulter am Volumenabschnitt 12 bzw. am Anschlussabschnitt des Volumenabschnittes 12 festgelegt. Vorteilhafterweise sind wenigstens zwei solcher Rastabschnitte vorgesehen, um einen sicheren Halt des Endabschnittes 14 am Volumenabschnitt 12 garantieren zu können. Am Endabschnitt 14 ist ein Halteabschnitt 24 ausgebildet, der bevorzugt zangen- und klammerartig ausgebildet sein kann, um einen Pumpenabschnitt 26 zu halten, der Flüssigkeit, die über den Befüllkanal 20 in den Volumenabschnitt 12 eingefüllt worden ist, einem Spritzwassersystem eines Kraftfahrzeuges zuführen zu können. Die Zuführung erfolgt über einen Pumpenauslass 28.

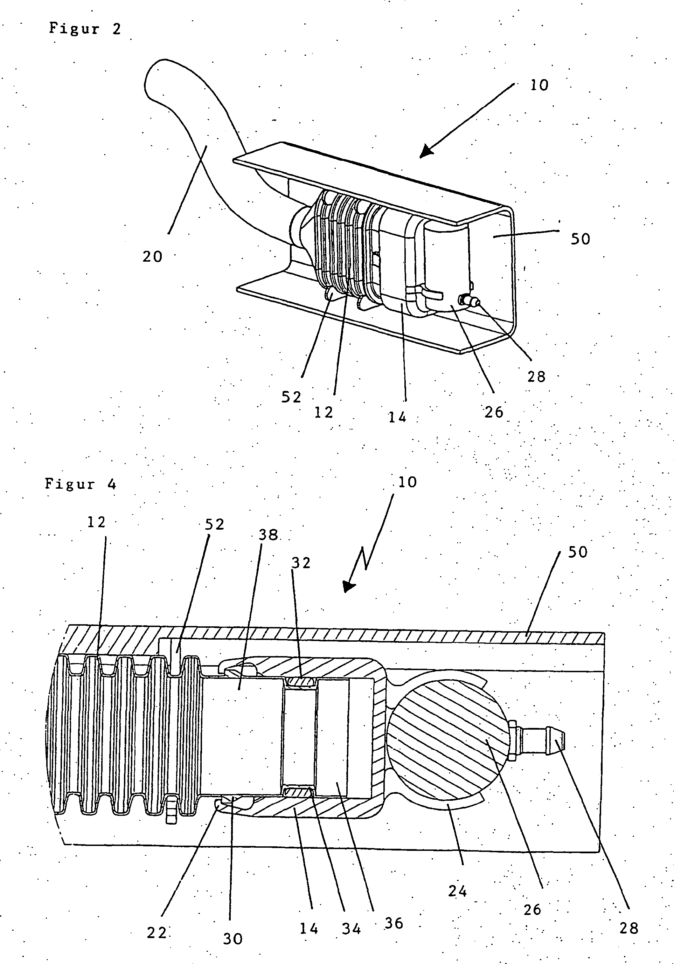

In Fig. 2 ist in einer perspektivischen Ansicht der Vorratsbehälter 10 gemäß Fig. 1 nochmals dargestellt. In dieser Ansicht ist erkennbar, dass der Volumenabschnitt 12 oval ausgebildet ist, während der Befüllkanal, der hier glattwandig dargestellt ist, jedoch gleichermaßen ein Wellrohrabschnitt sein kann, einen kreisförmigen Querschnitt aufweist.

In der Fig. 3 ist ein axial in Fig. 1 angelegter Teilschnitt zu erkennen, der den erfindungsgemäßen Vorratsbehälter 10 insbesondere am Zulaufabschnitt 16, 18, 20 und am Ablaufabschnitt im Bereich des Endabschnittes 14 schneidet. Der Volumenabschnitt 12 ist hier wellenartig ausgebildet. Der Wellrohrabschnitt kann gestaucht aber auch axial verlängert bzw. expandiert werden. Zu erkennen ist hier, dass der Zulaufabschnitt mit dem Reduktionsabschnitt 16, dem Anschlussabschnitt 18 und dem Befüllkanalabschnitt, der auch ein Wellrohrabschnitt sein kann, einstückig ausgebildet ist, und zwar zusammen mit dem Volumenabschnitt 12 und dem Anschlussabschnitt 38, 36.

Der Anschlussabschnitt 36, 38 ist mit einer Aufnahmerille bzw. einem Aufnahmegraben 34 versehen, in den eine O-Ringdichtung 32 aufgenommen ist. An wenigstens zwei Bereichen des den Volumenabschnitt nahen Bereich des Anschlussabschnittes 38 sind zwei einander diametral gegenüberliegende Rastschultern 22 vorgesehen. Mit diesen Rastschultern gehen klammerartige Erstreckungen, nämlich Eingriffsschenkel 22 in einen Halteeingriff, um den Endabschnitt am Anschlussabschnitt 36, 38 zu halten, während der Muffen- oder hülsenartige Endabschnitt 14 den Anschlussabschnitt 36, 38 übergreifend eine Dichtfunktion zusammen mit dem O-Ring 32 ausübt.

Ein Pumpenabschnitt 26 wird in einem klammerartigen bzw. zangenartigen Halteorgan mit zwei Schenkeln 24 am Ende des Endabschnittes 36, 38 gehalten.

In der Fig. 4 ist die spezielle Form der Rastschultern 30 und der Halteschenkel 22 nochmals besser zu erkennen. Der Endabschnitt 14 kann auf dem Anschlussabschnitt 36, 38 des Volumenabschnittes 12 aufgeschoben werden. Dabei werden die Schenkel 22 durch die Schrägen auf den Rückseiten der Rastschultern 30 radial nach außen gedrückt. Anschlie-βend, nachdem die Rastschultern 30 radial nach innen zurückgehen, nehmen die Halteschenkel 22 ihre ursprüngliche Form wieder an und treten in einen Halteeingriff mit den Rastabschnitten 30.

Der Auslassabschnitt 28 der Pumpeinrichtung 26 ist so ausgebildet, dass sich ein Rohr oder Schlauch, insbesondere ein Wellrohr leicht aufschieben lässt, andererseits aber durch eine hier ebenfalls vorgesehene Rastschulter zurückgehalten wird, so dass auch ohne eine Schlauchschelle oder dgl., ein Schlauch oder Wellrohr festgehalten werden kann.

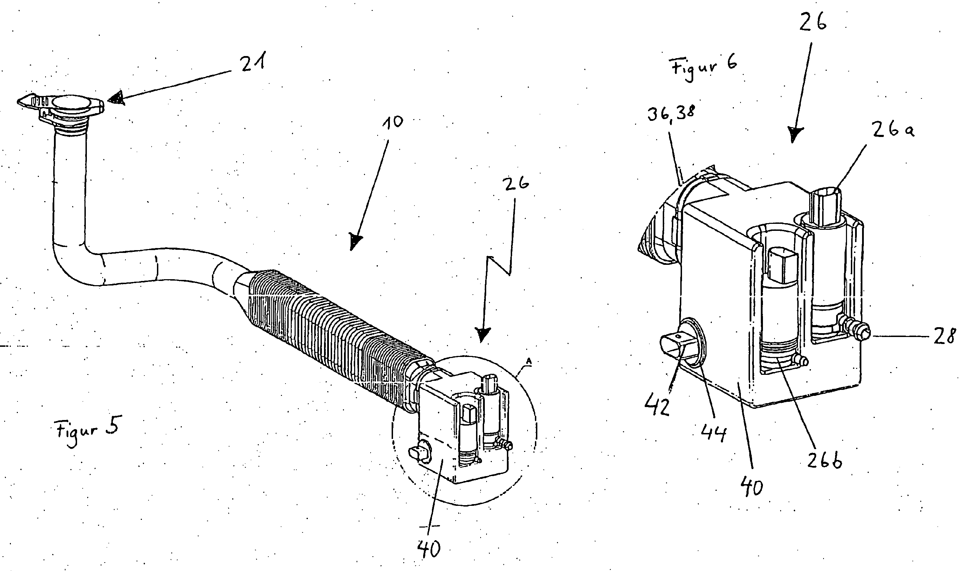

In Fig. 5 ist eine andere Ausführungsform der Anordnung gemäß der Erfindung dargestellt. Im Prinzip ist der Vorratsbehälter mit angesetztem Befüllkanal, hier insgesamt durch das Bezugszeichen 10 gekennzeichnet, gleichermaßen ausgebildet wie gemäß den voranstehend erörterten Figuren 1 bis 4. Hinzugekommen ist hier eine besondere Ausgestaltung der Pumpeinrichtung 26, die insbesondere in Fig. 6 in weiteren Einzelheiten beschrieben wird. An dem der Pumpeinrichtung 26 gegenüberliegenden Ende ist ein Verschluss 21 für den Befüllkanal vorgesehen. Hierzu kann das Befüllkanalende mit einer flanschartigen Form ausgebildet sein, wobei über diese flanschartige Form ein Halteabschnitt übergestreift werden kann, der über ein Filmscharnier, einen Verbindungsstreifen oder dgl. mit einem Verschluss ausgebildet ist, mit dem das Befüllende des Befüllkanals verschlossen werden kann.

Die Pumpeinrichtung 26 weist einen Restvolumenabschnitt 40 auf, der, wie aus Fig. 6 hervorgeht, tiefer angeordnet ist als der Befüllkanal bzw. als der Volumenabschnitt 12 (siehe Fig. 1 bis 4). Die Befestigung der Pumpeinrichtung 26 an dem Vorratsbehälter 16 kann in einer Weise vorgenommen sein, wie dies bereits in Bezug auf die voranstehenden Ausführungsformen beschrieben worden ist. Die Pumpeinrichtung 26 weist an ihrem unteren Ende den Restvolumenabschnitt 40 auf. An einer Seite des Restvolumenabschnitts, insbesondere an der Seite, an der der Anschluss an den Vorratsbehälter 10 über den Anschlussabschnitt 36, 38 vorgesehen ist, ist ein Volumensensor bzw. eine Volumenfühleinrichtung 42 vorgesehen, die in das Gehäuse der Pumpeinrichtung 26 eingefügt bzw. -geschraubt sein kann. Es ist auch möglich, eine Gummitülle vorzusehen, in die die Füllstandsanzeige eingesteckt oder eingeschraubt werden kann. Die Pumpeinrichtung 26 ist mit zwei Pumpen 26a, 26b dargestellt. Diese beiden Pumpeinrichtungen können vorgesehen sein, jedoch ist es die Intention, entweder die Pumpeinrichtung 26a für einen großen Spritzwasserbedarf vorzusehen, oder aber die kleinere Version eines Pumpaggregates 26b anzuordnen, insofern beispielsweise ein kleineres Kraftfahrzeug nur geringe Mengen an Spritzwasser bzw. Scheibenwaschflüssigkeit erfordert. Dementsprechend kann natürlich auch die Gehäusegröße der Pumpeinrichtung 26 und auch der Restvolumenabschnitt 40 je nach Spritzwasserbedarf bzw. Reinigungsflüssigkeitsbedarf unterschiedlich ausgebildet sein.

## Patentansprüche

1. Anordnung zur Speicherung und Zuführung von Spritzwasser bei einem Kraftfahrzeug, mit einem Vorratsbehälter (10) für die Bevorratung des Spritzwassers für das Spritzwassersystem des Kraftfahrzeuges, wobei der Vorratsbehälter (10) einen Volumenabschnitt (12), mindestens einen Anschlussabschnitt (16, 18, 36, 38) und einen Endabschnitt (14) aufweist,
wobei der Volumenabschnitt (12) einen Volumenexpansions- bzw. Volumenreduktionsabschnitt (12) aufweist, wobei der Anschlussabschnitt und insbesondere der Endabschnitt (14) eine Pumpeinrichtung (26) aufweist, **dadurch gekennzeichnet, dass** die Pumpeinrichtung (26) im Einbauzustand an ihrem unteren Ende einen Restvolumenabschnitt (40) aufweist, der tiefer angeordnet ist als der Volumenabschnitt (12).

2. Anordnung nach Anspruch 1, **dadurch gekennzeichnet, dass** der Volumenexpansions- bzw. Volumenreduktionsabschnitt einen Wellungs- oder Faltenbalgbereich (12) umfasst.

3. Anordnung nach einem der Ansprüche 1 oder 2, **dadurch gekennzeichnet, dass** ein Formanpassungsabschnitt vorgesehen ist, so dass der Vorratsbehälter in seiner Form veränderbar ist, und der Formanpassungsabschnitt bevorzugt in der Form des Volumenabschnittes (12) vorgesehen ist.

4. Anordnung nach einem der Ansprüche 1 bis 3, **dadurch gekennzeichnet, dass** der Volumenabschnitt rohrartig ausgebildet ist, insbesondere einen wellrohrartigen Abschnitt umfasst, an dem der Anschlussabschnitt (36, 38, 16, 18) vorgesehen ist, an dem der Endabschnitt (14) anschließbar ist.

5. Anordnung nach Anspruch 4, **dadurch gekennzeichnet, dass** der Endabschnitt (14) einen Zu- und/oder Ablaufabschnitt (26, 28, 16, 18, 20) umfasst, und bevorzugt in Bezug auf den Anschlussabschnitt auf- und/oder einsteckbar ist.

6. Anordnung nach einem der Ansprüche 4 oder 5, **dadurch gekennzeichnet, dass** der Anschlussabschnitt und/oder der Endabschnitt Dichtmittel (32, 34) aufweist/aufweisen.

7. Anordnung nach einem der Ansprüche 1 oder 4 bis 6, **dadurch gekennzeichnet, dass** der Anschlussabschnitt wenigstens eine Rast- und/oder Klemmeinrichtung (30) aufweist, die den Endabschnitt (14) am Anschlussabschnitt und damit am Volumenabschnitt (12) hält

8. Anordnung nach einem der Ansprüche 1 bis 7, **dadurch gekennzeichnet, dass** an einem Ende ein Zulaufabschnitt vorzugsweise dichtend festlegbar ist oder einstückig mit dem Volumenabschnitt ausgebildet ist.

9. Anordnung nach Anspruch 1, **dadurch gekennzeichnet, dass** der Restvolumenabschnitt (40) mit einem Füllstandsfühler (42) ausbildbar ist.

## Claims

1. Assembly for storing and supplying spray water in an automotive vehicle, with a storage container (10) for storing the spray water for the spray water system of the automotive vehicle, which storage container (10) comprises a volume section (12), at least one connecting section (16, 18, 36, 38) and an end section (14),
and the volume section (12) has a volume expanding respectively volume reducing section (12), and the connecting section and in particular the end section (14) had a pump unit (26), **characterised in that**, in the fitted state, the pump unit (26) had a residual volume section (40) at its bottom end which is disposed deeper than the volume section (12).

2. Assembly as claimed claim 1, **characterised in that** the volume expanding respectively volume reducing section comprises a corrugated or folded bellows region (12).

3. Assembly as claimed in one of claims 1 or 2, **characterised in that** a form-fitting section is provided so that the storage container can be varied in terms of its shape, and the form-fitting section is preferably provided in the form of the volume section (12).

4. Assembly as claimed in one of claims 1 to 3, **characterised in that** the volume section is of a tubular design, in particular comprises a section of the corrugated pipe type, on which the connecting section (36, 38, 16, 18) is disposed and to which the end section (14) can be connected.

5. Assembly as claimed in claim 4, **characterised in that** the end section (14) comprises an inlet and/or outlet section (26, 28, 16, 18, 20) and can preferably be fitted on and/or inserted in the connecting section.

6. Assembly as claimed in one of claims 4 or 5, **characterised in that** the connecting section and/or the end section has/have seal means (32, 34).

7. Assembly as claimed in one of claims 1 or 4 to 6, **characterised in that** the connecting section has at least one catch and/or clamping device (30) which holds the end section (14) on the connecting section and hence on the volume section (12).

8. Assembly as claimed in one of claims 1 to 7, **characterised in that** an inlet section can be attached to one end, preferably in a sealed arrangement, or is of an integral design with the volume section.

9. Assembly as claimed in claim 1, **characterised in that** the residual volume section (40) may be fitted with a level sensor (42).

## Revendications

1. Dispositif pour accumuler et fournir de l'eau de projection dans un véhicule automobile, avec un réservoir de stockage (10) pour l'approvisionnement en eau de projection du système d'eau de projection du véhicule automobile, dans lequel le réservoir de stockage (10) présente une section de volume (12), au moins une section de raccordement (16, 18, 36, 38) et une section finale (14), dans lequel la section de volume (12) présente une section de dilatation de volume ou de réduction de volume (12), dans lequel la section de raccordement et en particulier la section finale (14) présente un dispositif de pompage (26), **caractérisé en ce que** le dispositif de pompage (26) présente à son extrémité inférieure, à l'état monté, une section de volume résiduel (40), qui est disposée plus bas que la section de volume (12).

2. Dispositif selon la revendication 1, **caractérisé en ce que** la section de dilatation de volume ou de réduction de volume comprend une zone de soufflet ondulé ou plissé (12).

3. Dispositif selon l'une des revendications 1 ou 2, **caractérisé en ce qu'**il est prévu une section d'adaptation de forme, de telle manière que le réservoir de stockage puisse subir un changement de forme et la section d'adaptation de forme est prévue de préférence sous la forme de la section de volume (12).

4. Dispositif selon l'une quelconque des revendications 1 à 3, **caractérisé en ce que** la section de volume est réalisée en forme de tube, et présente en particulier une section en forme de tube ondulé, sur laquelle est prévue la section de raccordement (36, 38, 16, 18) à laquelle la section finale (14) peut se raccorder.

5. Dispositif selon la revendication 4, **caractérisé en ce que** la section finale (14) comprend une section d'arrivée et/ou de départ (26, 28, 16, 18, 20), et peut de préférence s'engager sur ou dans celle-ci par rapport à la section de raccordement.

6. Dispositif selon l'une des revendications 4 ou 5, **caractérisé en ce que** la section de raccordement et/ou la section finale présente/présentent des moyens d'étanchéité (32, 34).

7. Dispositif selon l'une quelconque des revendications 1 ou 4 à 6, **caractérisé en ce que** la section de raccordement présente au moins un dispositif d'encliquetage et/ou de serrage (30), qui maintient la section finale (14) sur la section de raccordement et dès lors sur la section de volume (12).

8. Dispositif selon l'une quelconque des revendications 1 à 7, **caractérisé en ce qu'**une section d'arrivée peut être fixée, de préférence de façon étanche, à une extrémité ou est réalisée d'une seule pièce avec la section de volume.

9. Dispositif selon la revendication 1, **caractérisé en ce que** la section de volume résiduel (40) peut être réalisée avec un détecteur de niveau (42).
